# EUROPÄISCHE PATENTSCHRIFT

(11) **EP 0 742 450 B1**
(45) Veröffentlichungstag und Bekanntmachung des Hinweises auf die Patenterteilung: **05.06.2002**
(21) Anmeldenummer: 96103881.7
(22) Anmeldetag: 12.03.1996
(51) Int. Cl.: G01S 17/32, G01S 7/497

(54) **Verfahren und Vorrichtung zur Bestimmung der Lichtlaufzeit über eine zwischen einer Messvorrichtung und einem reflektierenden Objekt angeordnete Messstrecke**
Method and apparatus for measuring the time for light to travel a measurement path extending between a measurement apparatus and a reflecting object
Procédé et dispositif de mesure du temps de vol de lumière le long d'une trajectoire de mesure entre un dispositif de mesure et un objet réfléchissant

(30) Priorität: 09.05.1995 DE 19517001
(43) Veröffentlichungstag der Anmeldung: 13.11.1996
(73) Patentinhaber: SICK AG, 79183 Waldkirch (DE)
(72) Erfinder: Blöhbaum, Frank, 79104 Freiburg (DE)
(74) Vertreter: Manitz, Finsterwald & Partner

(56) Entgegenhaltungen:
- DE-A- 4 217 423
- FR-A- 2 258 639
- TAKEUCHI, BABA, SAKURAI, UENO : "Diode-laser random-modulation cw lidar" APPLIED OPTICS, Bd. 25, Nr. 1, Januar 1986, Seiten 63-67, XP002078534 New York
- NING CHANG ET AL: "ON N-PHASE BARKER SEQUENCES" IEEE TRANSACTIONS ON INFORMATION THEORY, Bd. 40, Nr. 4, Juli 1994, Seiten 1251-1253, XP000476865

## Beschreibung

Die Erfindung betrifft ein Verfahren zur Bestimmung der Lichtlaufzeit über eine zwischen einer Meßvorrichtung und einem reflektierenden Objekt angeordnete Meßstrecke, bei dem ein in der Meßvorrichtung enthaltener Lichtsender ein moduliertes Lichtsignal s(t) über die Meßstrecke sendet, das von einem in der Meßvorrichtung enthaltenen Lichtempfänger empfangen, in ein Empfangssignal e(t) gewandelt und in der Meßvorrichtung ausgewertet wird sowie eine Vorrichtung zur Durchführung dieses Verfahrens.

Derartige Verfahren bzw. Vorrichtungen werden bei Abstandsmessungen eingesetzt, die den zu ermittelnden Abstand zwischen Meßvorrichtung und reflektierendem Objekt bzw. die Länge der Meßstrecke aus der Lichtlaufzeit über die Meßstrecke berechnen.

DE-A-42 17 423 offenbart ein Entfernungsmeßverfahren, wobei ein Meßsignal einerseits den Meßpfad und andererseits einen Vergleichspfad durchläuft, wobei als Vergleichspfad ein steuerbares, digitales Verzögerungsglied verwendet wird. Das Meßpfadausgangssignal und das Vergleichspfadausganssignal werden einem Korrelationsnetzwerk als Auswerteschaltung zugeführt.

Bei derartigen Verfahren bzw. Vorrichtungen ist es oftmals problematisch, daß bei vergleichsweise großen Abständen eine sehr genaue Auflösung erzielt werden muß, wobei zudem bezüglich der verwendeten Strahlungsleistung die bestehenden Vorschriften hinsichtlich der Augensicherheit eingehalten werden müssen.

Zur Erfüllung der genannten Anforderungen ist bei Vorrichtungen bzw. Verfahren gemäß dem Stand der Technik ein hoher technischer Aufwand zu betreiben, der sich negativ auf die Wirtschaftlichkeit auswirkt.

Eine Aufgabe der vorliegenden Erfindung besteht darin, ein Verfahren bzw. eine Vorrichtung der eingangs genannten Art so auszubilden, daß mit möglichst geringem wirtschaftlichen Aufwand unter Gewährleistung der Augensicherheit auch bei großen Abständen eine hohe Auflösung erzielbar ist.

Mit einem erfindungsgemäßen Verfahren wird diese Aufgabe dadurch gelöst, daß das auszusendende Lichtsignal s(t) in Form von Digitalwerten in einem Sendespeicher abgelegt wird, daß die gespeicherten Digitalwerte sequentiell ausgelesen und einem mit einem Taktsignal beaufschlagten, den Lichtsender ansteuernden D/A-Wandler zugeführt werden, daß das Empfangssignal e(t) einem mit dem identischen Taktsignal beaufschlagten A/D-Wandler zugeführt wird, daß die von dem A/D-Wandler gelieferten Werte in einem Empfangsspeicher abgelegt werden, daß zwischen den in Sende- und im Empfangsspeicher gespeicherten Signalen s(t) und e(t) eine Korrelationsfunktion k(t) gebildet wird, und daß das Maximum Kₘₐₓ = k(tₘₐₓ) der Korrelationsfunktion k(t) ermittelt wird, wobei tₘₐₓ der zu ermittelnden Lichtlaufzeit entspricht.

Erfindungsgemäß werden also der D/A-Wandler und der A/D-Wandler synchron mit dem identischen Taktsignal beaufschlagt, was zur Folge hat, daß immer genau dann, wenn ein Digitalwert aus dem Sendespeicher in einen Analogwert gewandelt und vom Lichtsender ausgesandt wird, der im gleichen Augenblick vom Lichtempfänger gelieferte Analogwert in einen Digitalwert gewandelt und im Empfangsspeicher abgelegt wird. Nach einem Sende- und Empfangszyklus liegen folglich im Sendeund im Empfangsspeicher Signale im wesentlichen gleicher Kurvenform, wobei - unter Vernachlässigung interner Signallaufzeiten - das empfangene Signal gegenüber dem ausgesandten Signal zeitlich um die einer bestimmten Anzahl von Taktzyklen entsprechende Lichtlaufzeit über die Meßstrecke verschoben ist.

Erfindungsgemäß wird die der Lichtlaufzeit entsprechende Anzahl der Taktzyklen dadurch ermittelt, daß zwischen dem Sende- und dem Empfangssignal eine Korrelationsfunktion gebildet und deren Maximum ermittelt wird. Beim Maximum der Korrelationsfunktion sind Sende- und Empfangssignal soweit relativ zueinander verschoben, daß ihre Kurven einen minimalen Abstand voneinander aufweisen bzw. sich weitgehend überdecken. Diese Verschiebung entspricht dabei exakt der Lichtlaufzeit bzw. der Anzahl der Taktzyklen, die zwischen dem Aussenden und dem Empfangen des Signals verstrichen sind.

Auf diese Weise läßt sich die Lichtlaufzeit mit geringem Rechenaufwand unter Einsatz kostengünstiger Bauelemente ermitteln, ohne daß beispielsweise wie beim Stand der Technik ein großer optischer Aufwand betrieben oder ein GHz-Zähler eingesetzt werden muß.

Das auszusendende Lichtsignal kann beispielsweise die Form von aufeinanderfolgenden Rechteck-Impulsfolgen jeweils vorgegebener Zeitdauer und vergleichsweiser großer Bandbreite aufweisen. Besonders vorteilhaft ist es, wenn die Zeitdauer der verwendeten Impulsfolgen möglichst kurz und deren Bandbreite möglichst groß gewählt wird.
Beim Einsatz von Rechteck-Impulsfolgen können beispielsweise Barker-Folgen, insbesondere der Länge n = 13 verwendet werden.

Vorzugsweise unterbleibt eine Lichtsignalaussendung während der in der Meßvorrichtung erfolgenden Berechnung der Lichtlaufzeit aus dem Sende- und dem Empfangssignal. In diesem Fall wird also eine Impulsfolge ausgesandt und um die Lichtlaufzeit verschoben empfangen, woraufhin der Lichtsender abgeschaltet wird und die Berechnung der Lichtlaufzeit erfolgt. Anschließend beginnt der beschriebene Vorgang von neuem.

In letztgenanntem Fall ist von Vorteil, daß mit einer relativ hohen Strahlungsleistung gearbeitet werden kann ohne die Augensicherheit zu gefährden, da der Lichtsender nicht ständig sondern lediglich in Intervallen betrieben wird. Durch die auf diese Weise erhöhte Strahlungsleistung werden die Anforderungen an die Rauscharmut des Lichtempfängers reduziert, was zu einer weiteren Kostenersparnis beiträgt.

Um die Berechnung der erwähnten Korrelationsfunktion k(t) zu ermöglichen, werden das Sendesignal und das Empfangssignal im Sende- bzw. Empfangsspeicher als um den Wert Null bipolares Signal abgelegt. Da vom Lichtempfänger kein bipolares Signal geliefert werden kann, wird das Empfangssignal bevor es im Empfangsspeicher abgelegt wird, auf geeignete Weise in ein bipolares Signal gewandelt.

Für bestimmte Anwendungsfälle wird bezüglich der zu ermittelnden Lichtlaufzeit eine sehr hohe Auflösung benötigt, die beispielsweise beim Einsatz von mit ungefähr 30 MHz getakteten A/D- bzw. D/A-Wandlern nicht ohne weiteres erreichbar ist, da die Lichtlaufzeit in diesem Fall lediglich auf 33,3 ns genau bestimmt werden könnte. Für Entfernungsmessungen im cm-Bereich ist es jedoch nötig, eine Zeitauflösung von ungefähr 0,1 ns zu erreichen. Dies läßt sich im Rahmen des erfindungsgemäßen Verfahrens auf einfache Weise dadurch erreichen, daß ein Polynom p(t) ermittelt wird, dessen Abstand zur Korrelationsfunktion k(t) im Bereich von Kₘₐₓ minimal ist und dessen Maximum Pₘₐₓ = P(t_{max/pol}) bestimmt wird, wobei t_{max/pol} anstelle von tₘₐₓ der zu ermittelnden Lichtlaufzeit entspricht.

Zur Polynomberechnung können dabei drei oder mehr Werte der Korrelationsfunktion k(t) herangezogen werden.

Problematisch bei den beschriebenen Verfahren ist die Tatsache, daß Signallaufzeiten innerhalb der Meßvorrichtung zu Meßfehlern führen. Diese können durch Einschaltung einer Referenzstrecke eliminiert werden, in welcher Referenzsignale identische oder entsprechende Bauelemente wie die Meßsignale durchlaufen, wobei die von Meßfehlern bereinigte Lichtlaufzeit in diesem Fall dadurch erhalten werden kann, daß von der Summe aus der Lichtlaufzeit und den Meßsignallaufzeiten in der Meßvorrichtung die Signallaufzeit des Referenzsignals in der Meßvorrichtung subtrahiert wird. Bei einer bevorzugten Ausführungsform der Erfindung wird demzufolge das auszusendende Lichtsignal vom Lichtsender zusätzlich über eine Referenzstrecke bekannter oder vernachlässigbar kleiner Länge gesendet und für die Ermittlung der Länge der Meßstrecke die Differenz der Lichtlaufzeiten über Meß- und Referenzstrecke berücksichtigt, wobei diese beiden Lichtlaufzeiten mit dem Meßfehler der Signallaufzeiten innerhalb der Meßvorrichtung behaftet sind und dieser Meßfehler durch die erwähnte Differenzbildung eliminiert wird.

Im Rahmen des erfindungsgemäßen Verfahrens kann vor dem Aussenden einer Impulsfolge über die Meßstrecke die Strahlungsleistung des Lichtsenders auf einen vorgegebenen Mittelwert, insbesondere auf die halbe Maximalleistung des Lichtsenders eingeregelt werden. Bevorzugt wird die Regelfunktion während des Aussendens einer Impulsfolge über die Meßstrecke, insbesondere durch das Umschalten der Zeitkonstante eines entsprechenden Regelkreises, außer Betrieb gesetzt.

Bei einer weiteren bevorzugten Ausführungsform des erfindungsgemäßen Verfahrens können nach der Berechnung der Lichtlaufzeit ein oder mehrere Plausibilitätsprüfungen stattfinden, welche auf unterschiedliche Weise realisierbar sind:

Wenn für das auszusendende Lichtsignal ein Signal der Form gewählt wird, daß die ermittelte Korrelationsfunktion k(t) symmetrisch zu ihrem Maximum Kₘₐₓ verläuft (z. B. Barker-Folge mit n=13), können zur Plausibilitätsprüfung durch die Funktionswerte k(tₘₐₓ-2) und k(tₘₐₓ-1) sowie durch die Funktionswerte k(tₘₐₓ+1) und k(tₘₐₓ+2) Geraden gelegt werden, woraufhin überprüft wird, ob die Differenz deren Steigungen innerhalb eines vorgegebenen Toleranzbereichs liegt.

Alternativ oder zusätzlich ist es möglich, daß zur Plausibilitätsprüfung der Abstand, insbesondere das Quadrat des Abstands des Polynoms p(t) zu ermittelten Werten der Korrelationsfunktion k(t) im Bereich des Maximums Pₘₐₓ bestimmt wird und überprüft wird, ob diese Werte bzw. die Summe dieser Werte innerhalb eines vorgegebenen Toleranzbereichs liegen.
Wenn in diesem Fall beispielsweise das Empfangssignal einen zu geringen Pegel aufweist, dominiert das überlagerte Rauschsignal, was dazu führt, daß das Empfangssignal eine von der Form des Sendesignals verschiedene Form besitzt und die ermittelten Abstandswerte den vorgegebenen Toleranzbereich überschreiten.

Schließlich kann zusätzlich oder alternativ zur Plausibilitätsprüfung festgestellt werden, ob das Maximum Kₘₐₓ der Korrelationsfunktion k(t) oberhalb eines vorgegebenen Grenzwerts liegt.

Bei den beschriebenen Plausibilitätstests ist es von Vorteil, daß diese amplitudenfrei, das heißt unabhängig von der Amplitude des ausgesandten Lichtsignals, arbeiten.

Falls eine oder mehrere der genannten Plausibilitätsprüfungen zu einem negativen Ergebnis führen, kann ein Warnund/oder Steuersignal abgegeben werden.

Eine mögliche Ausführungsform einer Meßvorrichtung zur Durchführung des erfindungsgemäßen Verfahrens besitzt beispielsweise einen Sendespeicher zum Speichern des auszusendenden Lichtsignals s(t) in Form von Digitalwerten, einen vom Sende-Speicher beaufschlagten und den Lichtsender ansteuernden D/A-Wandler, einen mit dem Empfangssignal e(t) beaufschlagten A/D-Wandler, einen Empfangsspeicher zum Speichern der von dem A/D-Wandler gelieferten Werte und einen den D/A-Wandler und den A/D-Wandler mit jeweils dem identischen Taktsignal beaufschlagenden Taktgeber, wobei eine Auswerteschaltung mit Mitteln zur Bildung einer Korrelationsfunktion k(t) zwischen den in Sende- und im Empfangsspeicher gespeicherten Signalen s(t) und e(t) und zur Ermittlung des die zu bestimmende Laufzeit tₘₐₓ repräsentierenden Maximums Kₘₐₓ = k(tₘₐₓ) der Korrelationsfunktion k(t) versehen ist.

Bevorzugt kann am Ende einer zusätzlich vorgesehenen Referenzstrecke ein mit der Auswerteschaltung koppelbarer Referenzlichtempfänger angeordnet werden.

In diesem Fall ist es weiterhin möglich, einen Umschalter zur wahlweisen Kopplung des Lichtempfängers und des Referenzlichtempfängers mit der Auswerteschaltung vorzusehen.

Der Referenzlichtempfänger kann Bestandteil eines Regelkreises zur Einregelung des den Lichtsender beaufschlagenden Stroms sein, wobei insbesondere die Regelfunktion des Regelkreises durch eine Veränderung dessen Zeitkonstante zu- bzw. abschaltbar ist.

Das erfindungsgemäße Verfahren bzw. die vorstehend beschriebene Meßvorrichtung läßt sich bevorzugt in einer Reflexionslichtschranke verwenden.

Bei derartigen Reflexionslichtschranken sind Lichtsender und Lichtempfänger in einem Gehäuse angeordnet, wobei das vom Lichtsender ausgesandte Licht von einem reflektierenden Objekt in sich selbst reflektiert und vom Lichtempfänger empfangen wird.

Eine derartige Reflexionslichtschranke gibt immer dann ein Warn- bzw. Steuersignal ab, wenn die empfangene Strahlungsleistung einen vorgegebenen Pegel unterschreitet.

Für bestimmte Anwendungsfälle, insbesondere im Bereich der Sicherheitstechnik, ist es nötig, zusätzlich zu der Information über den Pegel der empfangenen Signalleistung bzw. die Anwesenheit eines Objektes im zu überwachenden Bereich auch noch den Ort des reflektierenden Objekts zu bestimmen, um so beispielsweise Manipulationen am Reflektor erkennen zu können.

Zu letztgenanntem Zweck kann das erfindungsgemäße Verfahren bzw. eine entsprechende Vorrichtung eingesetzt werden, um so eine Information über den Abstand zwischen der Meßvorrichtung und dem reflektierenden Objekt zu gewinnen. Die Komponenten Lichtsender und Lichtempfänger erfüllen in diesem Fall eine Doppelfunktion, da sie einerseits für die eigentliche Lichtschrankenfunktion und andererseits für die Abstandsmessung verwendet werden. Dies trägt ebenfalls zur Kostenreduzierung bei, da die entsprechenden Komponenten in der Vorrichtung nur einfach vorhanden sein müssen.

Weitere bevorzugte Ausführungsformen des erfindungsgemäßen Verfahrens und zu deren Durchführung geeigneter Vorrichtungen sind in den Unteransprüchen angegeben.

Die Erfindung wird nachfolgend anhand von Ausführungsbeispielen unter Bezugnahme auf die Zeichnung beschrieben; es zeigt:
- Fig. 1: ein Blockschaltbild einer Vorrichtung zur Durchführung des erfindungsgemäßen Verfahrens,
- Fig. 2: eine erfindungsgemäß gebildete Korrelationsfunktion,
- Fig. 3: eine durch ein Polynom angenäherte erfindungsgemäße Korrelationsfunktion,
- Fig. 4: ein Flußdiagramm zur Berechnung der Lichtlaufzeit,
- Fig. 5: eine mögliche Form einer in einem erfindungsgemäßen Verfahren ausgesandten Folge von Lichtimpulsen,
- Fig. 6: ein Blockschaltbild eines Regelkreises zur Einstellung der Strahlungsleistung eines Lichtsenders, und
- Fig. 7: ein Blockschaltbild einer bevorzugten Ausführungsform einer Vorrichtung zur Durchführung des erfindungsgemäßen Verfahrens.

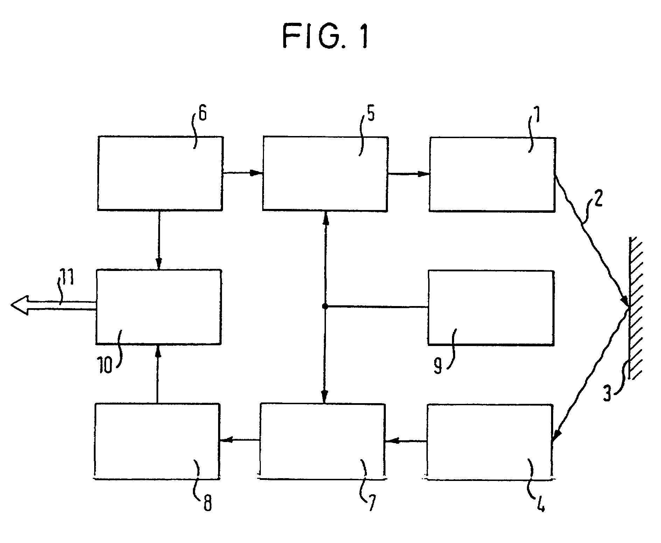

Das in Fig. 1 dargestellte Blockschaltbild zeigt einen Lichtsender 1, welcher Licht 2 über eine Meßstrecke zu einem Reflektor 3 sendet, der das Licht wiederum über die Meßstrecke zurück zu einem Lichtempfänger 4 reflektiert, wobei Lichtsender 1 und Lichtempfänger 4 vorzugsweise in einem gemeinsamen Gehäuse untergebracht sind.

Der Lichtsender 1 ist von einem D/A-Wandler 5 beaufschlagt, dem seinerseits in einem Sendespeicher 6 abgelegte Digitalwerte zugeführt werden.

Das Ausgangssignal des Lichtempfängers 4 wird einem A/D-Wandler 7 zugeleitet, welcher entsprechende Digitalwerte erzeugt und diese in einem Empfangsspeicher 8 ablegt.

Der D/A-Wandler 5 und der A/D-Wandler 7 werden synchron betrieben und mit einem gemeinsamen Taktsignal beaufschlagt, welches von einem Taktgenerator 9 erzeugt wird.

Die im Sendespeicher 6 und im Empfangsspeicher 8 abgelegten Digitalsignale werden von einer Prozessoreinheit 10 abgerufen, die aus diesen Signalen die Laufzeit des Lichtes über die Meßstrecke berechnet und diese über einen Ausgang 11 zur weiteren Verarbeitung zur Verfügung stellt.

Die beschriebene Anordnung arbeitet wie folgt:

Die im Sendespeicher 6 als digitales Signal abgelegte Impulsfolge mit Impulsen und Impulspausen unterschiedlicher Breite wird vom D/A-Wandler 5 in ein Analogsignal gewandelt, welches einen vorzugsweise als Laserdiode ausgebildeten Lichtsender 1 beaufschlagt.

Die auf diese Weise erzeugte Folge von Lichtimpulsen wird über die Meßstrecke in Richtung des Reflektors 3 abgestrahlt, welcher die Lichtimpulsfolge in umgekehrter Richtung über die Meßstrecke zum Lichtempfänger 4 reflektiert.

Der Lichtempfänger 4 erzeugt ein entsprechendes elektrisches Signal, verstärkt dieses gegebenenfalls mittels einer zusätzlichen Verstärkerkomponente und führt es dem A/D-Wandler 7 zu, welcher das empfangene Signal in eine Folge von Digitalwerten wandelt, die dann wiederum im Empfangsspeicher 8 abgelegt wird.

Bei ungestörter Reflexion und Nichtberücksichtigung eventuell auftretender Störsignale liegen somit nach einem Sende-/Empfangszyklus einer Folge von Lichtimpulsen im Sendespeicher 6 und im Empfangsspeicher 8 Signale gleicher Form vor, welche aufgrund der Lichtlaufzeit über die Meßstrecke sowie aufgrund interner Signallaufzeiten zeitlich gegeneinander verschoben sind.

Die Prozessoreinheit 10 errechnet eine Korrelationsfunktion zwischen den im Sende- und Empfangsspeicher 6, 8 gespeicherten Signalen, das heißt, es wird jeweils die Summe der Produkte gegenüberliegender Stützstellenwerte der beiden Signale berechnet und gespeichert, woraufhin das im Sendespeicher 6 gespeicherte Signal um ein Abtastintervall bzw. einen Funktionswert verschoben wird und die genannte Summe wiederum berechnet und gespeichert wird. Dieser Vorgang wird so oft wiederholt, bis alle Werte der auf diese Weise berechneten Korrelationsfunktion vorliegen. Die Anzahl der Verschiebe-, Produkt- und Summenbildungsschritte hängt dabei von der Frequenz des Taktgenerators 9 und der Länge der Meßstrecke ab.

Anschließend wird das Maximum der berechneten Korrelationsfunktion bestimmt, welches für diejenige Verschiebung der beiden Signale gegeneinander kennzeichnend ist, bei der sich die Signale bestmöglich überdecken. Die Lage dieses Maximums kennzeichnet dann die Summe aus der Lichtlaufzeit und den Signallaufzeiten in der Meßvorrichtung.

Die Signallaufzeiten in der Meßvorrichtung stellen Meßfehler dar, die beispielsweise auf eine nachfolgend noch beschriebene Art und Weise eliminiert werden können.

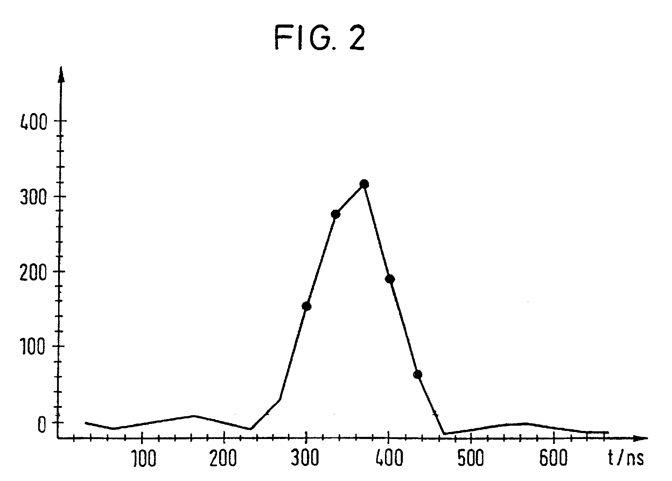

Fig. 2 zeigt einen Ausschnitt aus einer berechneten Korrelationsfunktion zwischen Sende- und Empfangssignal.

Fünf Stützstellenwerte der Korrelationsfunktion sind in Fig. 2 hervorgehoben gekennzeichnet, wobei der mittlere dieser fünf Werte das erwähnte Maximum darstellt.

Über die Zeitachse der Korrelationsfunktion, welche die zeitliche Verschiebung von Sende- und Empfangssignal gegeneinander kennzeichnet, kann abgelesen werden, daß das Maximum der Korrelationsfunktion in etwa bei 370 ns liegt, wobei dieser Wert der zu ermittelnden Laufzeit entspricht.

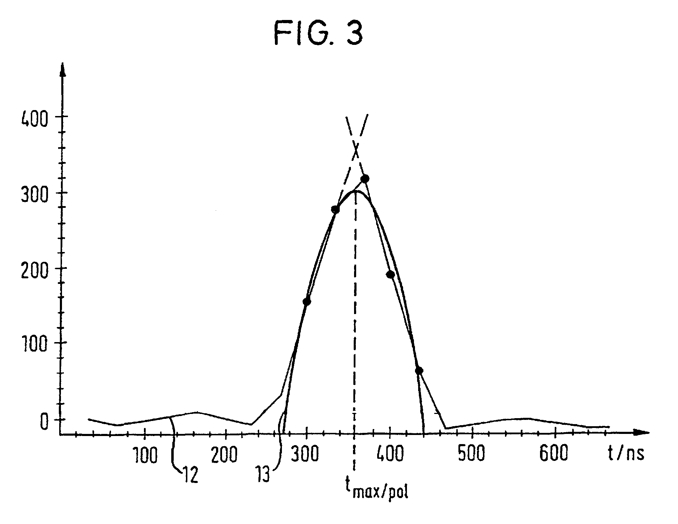

Falls die über die Maximumbestimmung der Korrelationsfunktion errechnete Laufzeit in bestimmten Anwendungsfällen auf die beschriebene Weise nicht mit ausreichender Genauigkeit berechnet werden kann, bietet sich an, die Korrelationsfunktion auf die bereits beschriebene Weise durch ein Polynom anzunähern, wie dies in Fig. 3 veranschaulicht ist.

Die Korrelationsfunktion 12 ist dabei durch das Polynom 13 angenähert und als die Lichtlaufzeit repräsentierendes Maximum wird nun nicht mehr der mittlere der fünf dargestellten Stützstellenwerte der Korrelationsfunktion 12 sondern die Lage des Maximums des Polynoms 13 (t_{max/pol}) herangezogen.

Für die Polynomberechnung können drei oder auch mehr Funktionswerte der Korrelationsfunktion herangezogen werden, wobei durch eine Überbestimmung des Polynoms eine Rauschfilterung erreicht werden kann.

Das Maximum des Polynoms kann dabei zwischen den die Lage der Stützstellenwerte der Korrelationsfunktion bestimmenden Abtastzeitpunkten liegen, wodurch letztendlich die gewünschte Erhöhung der Auflösung erreicht wird.

Die Auflösung läßt sich so gegenüber dem in Verbindung mit Fig. 2 beschriebenen Verfahren um ein Vielfaches erhöhen, ohne daß zusätzliche Hardware-Voraussetzungen geschaffen werden müßten, da die Erhöhung der Auflösung ausschließlich durch die Berechnung des Polynoms und dessen Maximum erreicht wird, was mit den ohnehin in der Meßvorrichtung vorhandenen Bauelementen ohne weiteres möglich ist.

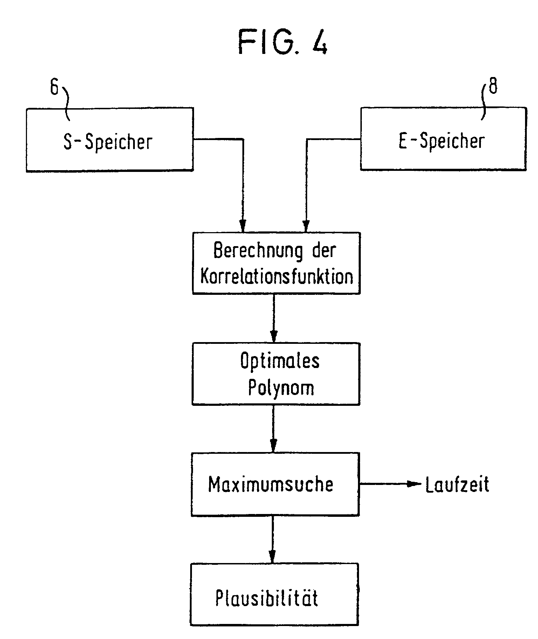

Fig. 4 veranschaulicht nochmals in Form eines Flußdiagramms die beschriebenen Berechnungsschritte.

Aus den im Sendespeicher 6 und im Empfangsspeicher 8 gespeicherten Signalen wird die Korrelationsfunktion berechnet, woraufhin in einem nachfolgenden Schritt ein diese Korrelationsfunktion optimal annäherndes Polynom bestimmt wird.

Anschließend wird das Maximum dieses Polynoms ermittelt, dessen Lage kennzeichnend für die zu ermittelnde Laufzeit ist.

Optional kann nach der Bestimmung des Maximums noch eine Plausibilitätsprüfung erfolgen, wobei hier verschiedene, vorstehend bereits beschriebene Methoden möglich sind.

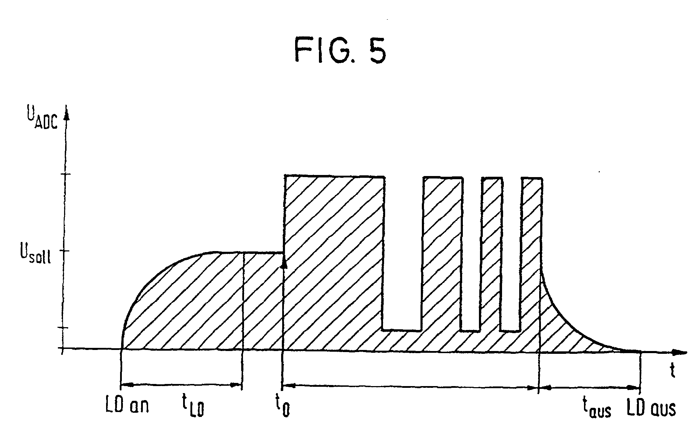

In Fig. 5 ist der zeitliche Verlauf einer vom Lichtsender 1 abgestrahlten Lichtimpulsfolge dargestellt.

Zu Beginn einer Impulsfolge wird zu Beginn der Zeitdauer t_{LD} der beispielsweise als Laserdiode ausgebildete Lichtsender eingeschaltet und das von ihm abgestrahlte Lichtsignal auf einen Sollwert U_{Soll} eingeregelt.

Der Sollwert Uₛₒₗₗ wird dabei so gewählt, daß entweder
a) dieser Sollwert fix ist und der maximal zulässigen Dauerleistung der Laserdiode entspricht und damit die von der Laserdiode abgestrahlte Lichtleistung über Temperatur und Alterung konstant bleibt, oder
b) dieser Sollwert variabel ist und laufend in Abhängigkeit der Meß- oder Referenzstreckendämpfung unter Einhaltung der vom Hersteller vorgeschriebenen Grenzwerte so korrigiert wird, daß sich das Ausgangssignal des Lichtempfängers bzw. das Eingangssignal des nachgeschalteten A/D-Wandlers auf einen Wert einstellt, der MSB/2 des A/D-Wandlers entspricht.

Auf diese Weise wird der Arbeitsbereich des A/D-Wandlers optimal ausgenützt und eine bestmögliche Auflösung des Empfangssignals erreicht.

Für den Fall a) eines fixen Sollwertes Uₛₒₗₗ wird sich in Abhängigkeit der Dämpfung der Meßstrecke und der Verstärkung vor dem A/D-Wandler ein bestimmtes Eingangssignal am A/D-Wandler einstellen. Der A/D-Wandler und seine Peripherie sind so beschaltet, daß eine analoge oder digitale Klemmung auf diesen Eingangspegel in der Weise vorgenommen wird, daß sich digitalseitig ein Wert von MSB/2 des A/D-Wandlers einstellt.

Die nach dem Einschwingvorgang zum Zeitpunkt t₀ beginnende Übertragung der Lichtimpulsfolge bewirkt dann, daß der A/D-Wandler eine auf MSB/2 bezogene Wechselspannung abtastet.

Um für die weitere Signalverarbeitung, insbesondere für die Berechnung der Korrelationsfunktion ein um den Wert Null bipolares Signal zur Verfügung zu haben, wird das vom A/D-Wandler erzeugte Signal im Digitalraum dadurch normiert, daß von allen ermittelten Signalwerten MSB/2 subtrahiert wird.

Da nach dem Einschwingen des Lichtsenders das Eingangssignal des A/D-Wandlers derart normiert wird, daß es MSB/2 entspricht, und eine Normierung des Empfangssignals in ein um den Wert Null bipolares Signal erfolgt, werden Schwankungen der empfangenen Strahlungsleistung eliminiert, die beispielsweise durch Temperaturänderungen oder eine Dämpfung der Meßstrecke infolge von Abstandsvariation oder Verschmutzung des Reflektors auftreten können.

Nach dem beschriebenen Einschwingen und der anschließenden Normierung wird die für die eigentliche Messung benötigte Impulsfolge ausgesandt. Die in Fig. 5 dargestellte Impulsfolge entspricht einer Barker-Folge mit n = 13.

Nach der Aussendung dieser Impulsfolge wird der Lichtsender ausgeschaltet, woraufhin innerhalb der Zeitspanne tₐᵤₛ die vom Lichtsender emittierte Strahlungsleistung auf den Wert Null absinkt.

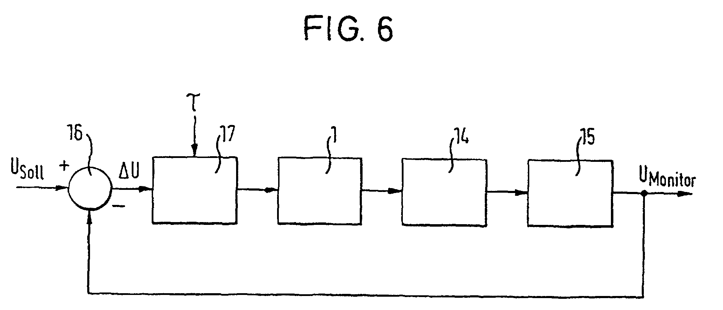

Bei einer bevorzugten Ausführungsform des erfindungsgemäßen Verfahrens wird entsprechend Fig. 6 das vom Lichtsender 1 ausgestrahlte Licht nicht nur über die Meßstrecke zum Lichtempfänger sondern auch über eine Referenzstrecke zu einer Monitordiode 14 gesandt, welche im selben Gehäuse angeordnet ist, wie der Lichtsender 1 und der in Fig. 6 nicht dargestellte Lichtempfänger.

Die Monitordiode 14 liefert einen Photostrom, welcher der vom Lichtsender 1 erzeugten Strahlung folgt. Dieser Photostrom wird einem Transimpedanzverstärker 15 zugeführt, welcher an seinem Ausgang eine Spannung liefert, die der vom Lichtsender 1 erzeugten, sich im Takt der Lichtimpulse ändernden Strahlung folgt.

Das Ausgangssignal des Transimpedanzverstärkers 15 wird mit umgekehrtem Vorzeichen einer Summierstufe 16 zugeführt, an deren anderem Eingang ein Spannungs-Sollwert U_{Soll} mit positivem Vorzeichen anliegt.

Das Ausgangssignal der Summierstufe 16, das der Differenz zwischen U_{Soll} und dem Ausgangssignal des Transimpedanzverstärkers 15 entspricht, wird einem Regler 17 mit der Zeitkonstanten τ zugeführt.

Die in Fig. 6 gezeigten Bauelemente bilden einen Regelkreis zur den den Lichtsender 1 ansteuernden Strom.

Dieser Regelkreis wird dahingehend optimiert, daß er eine minimale Einschwingzeit besitzt, um den in Fig. 5 mit t_{LD} gekennzeichnet Regelvorgang und damit die insgesamt benötigte Meßzeit so kurz wie möglich zu halten.

Nach dem beschriebenen Regelvorgang wird die Zeitkonstante des Regelkreises gemäß Fig. 6 auf einen sehr großen Wert umgeschaltet, wodurch die Regelfunktion außer Betrieb gesetzt wird. Bei dem auf den Einschwingvorgang folgenden Meßvorgang erfolgt dann demzufolge keine weitere Regelung.

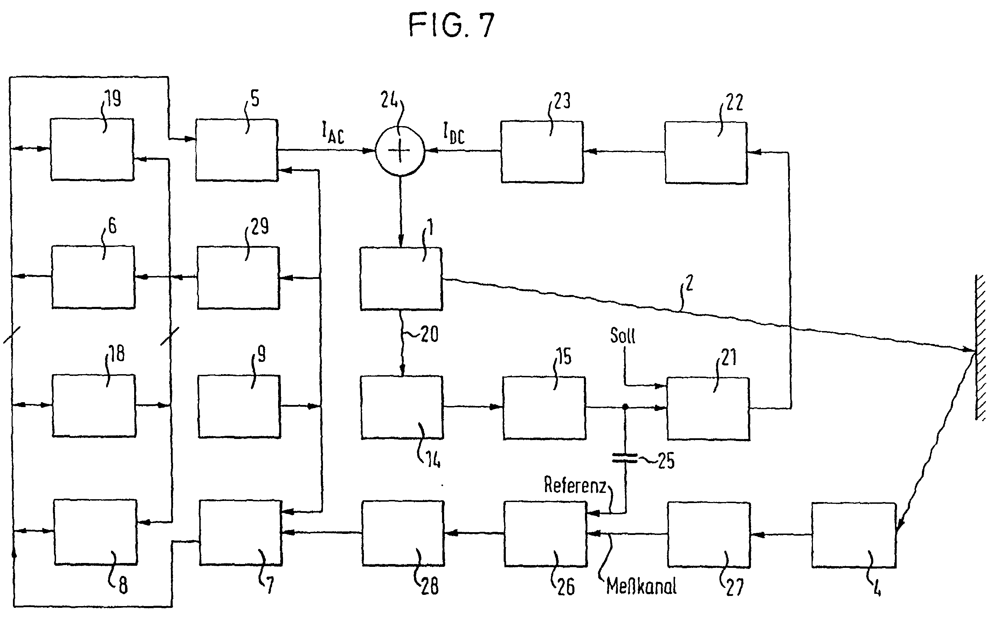

Fig. 7 zeigt ein detailliertes Ausführungsbeispiel einer Vorrichtung zur Durchführung des erfindunsgemäßen Verfahrens unter Einschaltung eines Regelkreises gemäß Fig. 6 und eines Referenzzweiges zur Eliminierung interner Signallaufzeiten.

In einem nichtflüchtigen Speicher 6, der beispielsweise als FRAM oder EPROM ausgeführt sein kann, ist das digitale Abbild der zu übertragenden Impulsfolge an definierten Adressen abgelegt.

Von einer Signalprozessoreinheit 18 wird der Inhalt des Speichers 6 in ein sehr schnelles RAM 19 übertragen, woraufhin die Signalprozessoreinheit 18 mit Hilfe eines entsprechenden Steuersignales den als Laserdiode ausgebildeten Lichtsender 1 einschaltet.

Anschließend wird der nachfolgend beschriebene Regelkreis aktiviert:

Ein vom Lichtsender 1 ausgestrahltes Referenzsignal 20 wird von der Monitordiode 14 empfangen und dem Transimpedanzverstärker 15 zugeführt.

Der Ausgang des Transimpedanzverstärkers 15 ist mit einem Verstärker- und Filterbaustein 21 gekoppelt, welchem zugleich ein Sollwert zugeführt wird, der kennzeichnend für die mittlere Ansteuerspannung des Lichtsenders 1 ist.

Der Ausgang des Verstärker- und Filterbausteins 21 ist mit dem Eingang einer Track & Hold-Stufe 22 verbunden, die eine spannungssteuerbare Stromquelle 23 beaufschlagt.

Der Ausgang der Stromquelle 23 ist mit einem Eingang einer Summierstufe 24 verbunden, deren Ausgang den Lichtsender 1 beaufschlagt.

Der aus den Komponenten 1, 20, 14, 15, 21, 22, 23 und 24 bestehende Regelkreis wird vor dem eigentlichen Meßvorgang durch das Einschalten des Lichtsenders 1 in Betrieb gesetzt und regelt die vom Lichtsender 1 abgegebene Strahlungsleistung auf einen vorgegebenen und einstellbaren Sollwert. Während dieses Regelvorgangs befindet sich die Track & Hold-Stufe 22 im Track-Mode.

Der Ausgang des Transimpedanzverstärkers 15 ist über einen Wechselspannungsanteile ausfilternden Kondensator 25 mit einem Eingang eines Umschalters 26 verbunden, dessen anderer Eingang mit dem Ausgangssignal eines weiteren Transimpedanzverstärkers 27 beaufschlagt ist, dem seinerseits das Ausgangssignal des Lichtempfängers 4 zugeführt ist.

Der Umschalter 26 weist zwei Schalterstellungen auf, von denen eine mit "Referenz" und die andere mit "Meßkanal" gekennzeichnet ist. In der Schalterstellung "Referenz" liegt am Ausgang des Umschalters 26 das durch den Kondensator 25 gefilterte Ausgangssignal des Transimpedanzverstärkers 15 des beschriebenen Regelkreises an, während in der Schalterstellung "Meßkanal" der Ausgang des vom Lichtempfänger 4 beaufschlagten Transimpedanzverstärkers 27 auf den Ausgang des Umschalters 26 durchgeschaltet ist.

Während des Einschwing- und Regelvorganges des Steuerstroms des Lichtsenders 1 wird die vom Lichtsender 1 über die Meßstrecke gesandte Strahlung 2 in der Schalterstellung "Meßkanal" des Umschalters 26 vom Lichtempfänger 4 empfangen, in einen Photostrom gewandelt und dem Transimpedanzverstärker 27 zugeführt, welcher diesen Strom in eine Spannung umwandelt, die über den Umschalter 26 an einen Verstärker 28 gelangt, der den A/D-Wandler 7 beaufschlagt. Der dem A/D-Wandler 7 vorgeschaltete Verstärker 28 verstärkt die an ihm anliegende Spannung in der Weise, daß der A/D-Wandler 7 über seinen gesamten Arbeitsbereich optimal ausgesteuert wird.

Nachdem der Steuerstrom des Lichtsenders 1 und damit auch der Spannungspegel am Eingang des A/D-Wandlers 7 eingeschwungen ist, wird die Eingangsstufe des A/D-Wandlers 7 in der Weise auf den an ihr anliegenden Spannungswert geklemmt, daß der A/D-Wandler 7 einen Digitalwert MSB/2 liefert. Damit ist der Regel- und Einschwingvorgang abgeschlossen, woraufhin die Track & Hold-Stufe 22 auf "hold" geschaltet wird, was einer Erhöhung der Zeitkonstante des beschriebenen Regelkreises und damit einem Ausschalten der Regelfunktion entspricht.

Beim nachfolgenden Meßvorgang bleibt daher der von der Stromquelle 23 gelieferte Strom konstant.

Zu Beginn des eigentlichen Meßvorgangs wird eine State-Machine 29 und der Taktgenerator 9 aktiviert.

Wie bereits beschrieben, taktet der Taktgenerator 9 synchron den D/A-Wandler 5 und den A/D-Wandler 7 mit jeweils identischem Taktsignal.

Die State-Machine 29 zählt den Adressbus des Empfangsspeichers 8 und des RAM 19 hoch. Während dieser Zeit wandelt der D/A-Wandler 5 die den jeweiligen Adressen entsprechenden Datenwörter in ein Analogsignal I_{AC} um und gleichzeitig schreibt der A/D-Wandler 7 das abgetastete Empfangssignal in den Empfangsspeicher 8.

Während des Aussendens des eigentlichen Meßsignals 2 setzt sich der Steuerstrom des Lichtsenders 1 aus der Summe des vom D/A-Wandler 5 gelieferten Stroms I_{AC} und des von der Stromquelle 23 gelieferten Stroms I_{DC} zusammen.

Nachdem alle Signalwerte des RAM 19 ausgelesen wurden bzw. nachdem die State Machine 29 ihren Zählerendzustand erreicht hat, wird der den Lichtsender 1 ansteuernde Strom abgeschaltet.

In der Folge errechnet die Signalprozessoreinheit 18 aus den Speicherinhalten des RAM 19 und des Empfangsspeichers 8 auf die vorstehend beschriebene Weise die aktuelle Laufzeit.

Anschließend kann eine Plausibilitätskontrolle erfolgen.

In entsprechender Weise geht die Referenzmessung vonstatten, bei der sich der Umschalter 26 in der Schalterstellung "Referenz" befindet.

Nach dem Einschwingvorgang und dem nun auf das Ausgangssignal der Monitordiode 14 bezogenen Klemmvorgang des A/D-Wandlers 7 sendet der Lichtsender 1 nunmehr ein Lichtsignal 20 über die Referenzstrecke zur Monitordiode 14.

Das Ausgangssignal der Monitordiode 14 wird über den Transimpedanzverstärker 15 unter Auskopplung des Gleichanteils über den Kondensator 25 dem Verstärker 28 zugeführt, wobei der zwischengeschaltete Umschalter 26 so ausgelegt ist, daß die Dämpfung zwischen ein- und ausgeschaltetem Signal mindestens der maximalen Dämpfung im Meßkanal entspricht.

Das während der Referenzmessung vom Verstärker 28 gelieferte Signal wird analog zum Meßvorgang im Empfangsspeicher 8 abgelegt, woraufhin die Laufzeit über die Referenzstrecke berechnet werden kann.

Diese Referenzlaufzeit wird dann von der während des eigentlichen Meßvorgangs ermittelten Laufzeit subtrahiert, wodurch das bezogen auf die Meßstrecke erhaltene Ergebnis von den internen Signallaufzeiten der Meßvorrichtung befreit wird.

Um den systematischen Fehler, der von dem in Referenz- und Meßkanal befindlichen, physikalisch nicht identischen Transimpedanzverstärkern 15 und 27 herrührt, klein zu halten, werden diese mit gleicher, im Vergleich zur Signalbandbreite wesentlich größerer Bandbreite ausgelegt. Zusätzlich ist es von Vorteil, wenn sich beide Transimpedanzverstärker 15, 27 auf demselben Chip befinden.

Beim Einsatz der beschriebenen Vorrichtung bzw. des erfindungsgemäßen Verfahrens können statistische Fehler dadurch verringert werden, daß mehrere Messungen aufeinanderfolgend durchgeführt werden und anschließend ein Mittelwert berechnet wird.

Als weiterer Plausibilitätstest können in diesem Fall die nach der Mittelwertberechnung ermittelten Meßwerte mit dem berechneten Mittelwert verglichen werden, wobei bei Abweichung von einer festgelegten Toleranzgrenze ein Warnund/oder Steuersignal abgegeben werden kann.

Alternativ kann der beschriebene Referenzzweig auch so ausgeführt sein, daß eine zusätzliche Photodiode vorgesehen wird, welche dazu geeignet ist, den Oberflächenreflex der Laseroptik zu erfassen. Der durch das Reflexlicht erzeugte Photostrom wird dann in eine Spannung umgewandelt und dem Umschalter 26 zugeführt, welcher für die Umschaltung zwischen Meßund Referenzstrecke verantwortlich ist. Auch in diesem Fall würde jedoch die Monitordiode 14 einschließlich des beschriebenen Regelkreises vorhanden bleiben, lediglich ihre Funktion würde in diesem Fall ausschließlich auf die Überwachung bzw. Bestimmung des Arbeitspunktes der Laserdiode bzw. des Lichtsenders 1 beschränkt sein.

## Patentansprüche

1. Verfahren zur Bestimmung der Lichtlaufzeit über eine zwischen einer Meßvorrichtung und einem reflektierenden Objekt (3) angeordnete Meßstrecke, bei dem ein in der Meßvorrichtung enthaltener Lichtsender (1) ein moduliertes Lichtsignal s(t) über die Meßstrecke sendet, das von einem in der Meßvorrichtung enthaltenen Lichtempfänger (4) empfangen, in ein Empfangssignal e(t) gewandelt und in der Meßvorrichtung ausgewertet wird,
**dadurch gekennzeichnet,**
**daß** das auszusendende Lichtsignal s(t) in Form von Digitalwerten in einem Sendespeicher (6, 19) abgelegt wird, daß die gespeicherten Digitalwerte sequentiell ausgelesen und einem mit einem Taktsignal beaufschlagten, den Lichtsender (1) ansteuernden D/A-Wandler (5) zugeführt werden, daß das Empfangssignal e(t) einem mit dem identischen Taktsignal beaufschlagten A/D-Wandler (7) zugeführt wird, daß die von dem A/D-Wandler (7) gelieferten Werte in einem Empfangsspeicher (8) abgelegt werden, daß zwischen den in Sende- (6, 19) und im Empfangsspeicher (8) gespeicherten Signalen s(t) und e(t) eine Korrelationsfunktion k(t) gebildet wird, und daß das Maximum Kₘₐₓ = k(tₘₐₓ) der Korrelationsfunktion k(t) ermittelt wird, wobei tₘₐₓ der zu ermittelnden Lichtlaufzeit entspricht.

2. Verfahren nach Anspruch 1,
**dadurch gekennzeichnet,**
**daß** als auszusendendes Lichtsignal s(t) Rechteck-Impulsfolgen jeweils vorgegebener Zeitdauer und großer Bandbreite verwendet werden, wobei insbesondere als Rechteck-Impulsfolgen Barker-Folgen, insbesondere der Länge n = 13 verwendet werden.

3. Verfahren nach einem der vorhergehenden Ansprüche,
**dadurch gekennzeichnet,**
**daß** während der in der Meßvorrichtung erfolgenden Berechnung der Lichtlaufzeit aus den Signalen s(t) und e(t) eine Lichtsignalaussendung unterbleibt und/oder daß das Signal s(t) und/oder e(t) vor der Berechnung der Korrelationsfunktion k(t) in ein um den Wert Null bipolares Signal gewandelt wird.

4. Verfahren nach einem der vorhergehenden Ansprüche,
**dadurch gekennzeichnet,**
**daß** ein Polynom p(t) ermittelt wird, dessen Abstand zur Korrelationsfunktion k(t) im Bereich von Kₘₐₓ minimal ist und dessen Maximum Pₘₐₓ = p(t_{max/pol}) bestimmt wird,
wobei t_{max/pol} anstelle von tₘₐₓ der zu ermittelnden Lichtlaufzeit entspricht, wobei insbesondere zur Polynomberechnung drei oder mehr Werte von k(t) herangezogen werden, und/oder daß das auszusendende Lichtsignal vom Lichtsender (1) zusätzlich über eine Referenzstrecke bekannter oder vernachlässigbar kleiner Länge gesendet und für die Ermittlung der Länge der Meßstrecke die Differenz der Lichtlaufzeiten über Meß- und Referenzstrecke berücksichtigt wird.

5. Verfahren nach einem der vorhergehenden Ansprüche,
**dadurch gekennzeichnet,**
**daß** die Strahlungsleistung des Lichtsenders (1) vor dem Aussenden einer Impulsfolge über die Meßstrecke auf einen vorgegebenen Mittelwert, insbesondere auf die halbe Maximalleistung des Lichtsenders (1) eingeregelt wird, wobei insbesondere die Regelfunktion während des Aussendens einer Impulsfolge über die Meßstrecke, insbesondere durch das Umschalten der Zeitkonstante eines entsprechenden Regelkreises außer Betrieb gesetzt wird.

6. Verfahren nach einem der vorhergehenden Ansprüche,
**dadurch gekennzeichnet,**
**daß** für das auszusendende Lichtsignal ein Signal der Form gewählt wird, daß die ermittelte Korrelationsfunktion k(t) symmetrisch zu ihrem Maximum Kₘₐₓ verläuft,
wobei insbesondere zur Plausibilitätsprüfung durch die Funktionswerte k(tₘₐₓ-2) und k(tₘₐₓ-1) sowie durch die Funktionswerte k(tₘₐₓ+1) und k(tₘₐₓ+2) Geraden gelegt werden und überprüft wird, ob die Differenz deren Steigungen innerhalb eines vorgegebenen Toleranzbereichs liegt.

7. Verfahren nach einem der vorhergehenden Ansprüche,
**dadurch gekennzeichnet,**
**daß** zur Plausibilitätsprüfung der Abstand, insbesondere das Quadrat des Abstands des Polynoms p(t) zu ermittelten Werten der Korrelationsfunktion k(t) im Bereich des Maximums Pₘₐₓ bestimmt wird und überprüft wird, ob diese Werte bzw. die Summe dieser Werte innerhalb eines vorgegebenen Toleranzbereichs liegen, und/oder daß zur Plausibilitätsprüfung festgestellt wird, ob das Maximum Kₘₐₓ der Korrelationsfunktion k(t) oberhalb eines vorgegebenen Grenzwerts liegt.

8. Meßvorrichtung zur Bestimmung der Lichtlaufzeit über eine Meßstrecke mit einem Lichtsender (1) zur Aussendung eines modulierten Lichtsignals s(t), einem Lichtempfänger (4) zum Empfang des von einem Objekt (3) reflektierten Lichtsignals und einer Auswerteschaltung zur Verarbeitung des vom Lichtempfänger (4) erzeugten Empfangssignals e(t),
**gekennzeichnet durch,**
einen Sendespeicher (6, 19) zum Speichern des auszusendenden Lichtsignals s(t) in Form von Digitalwerten,
einen vom Sendespeicher (6, 19) beaufschlagten und den Lichtsender (1) ansteuernden D/A-Wandler (5), einen mit dem Empfangssignal e(t) beaufschlagten A/D-Wandler (7), einen Empfangsspeicher (8) zum Speichern der von dem A/D-Wandler (7) gelieferten Werte und einen den D/A-Wandler (5) und den A/D-Wandler (7) mit jeweils dem identischen Taktsignal beaufschlagenden Taktgeber (9), wobei die Auswerteschaltung mit Mitteln (10, 18) zur Bildung einer Korrelationsfunktion k(t) zwischen den in Sende- (6, 19) und im Empfangsspeicher (8) gespeicherten Signalen s(t) und e(t) und zur Ermittlung des die zu bestimmende Laufzeit tₘₐₓ repräsentierenden Maximums Kₘₐₓ = k(tₘₐₓ) der Korrelationsfunktion k(t) versehen ist.

9. Meßvorrichtung nach Anspruch 8,
**gekennzeichnet durch,**
einen am Ende einer Referenzstrecke angeordneten und mit der Auswerteschaltung koppelbaren Referenzlichtempfänger (14), wobei insbesondere ein Umschalter (26) zur wahlweisen Kopplung des Lichtempfängers (4) und des Referenzlichtempfängers (14) mit der Auswerteschaltung vorgesehen ist.

10. Meßvorrichtung nach einem der Ansprüche 8 und 9,
**dadurch gekennzeichnet,**
**daß** der Referenzlichtempfänger (14) Bestandteil eines Regelkreises zur Einregelung des den Lichtsender (1) beaufschlagenden Stroms ist, wobei insbesondere die Regelfunktion des Regelkreises vorzugsweise durch eine Veränderung dessen Zeitkonstante zu- bzw. abschaltbar ist, und/oder daß für die Durchführung einer Referenzmessung eine zusätzliche Photodiode zur Erfassung des Oberflächenreflexes der Optik des Lichtsenders vorgesehen ist.

11. Verwendung eines Verfahrens nach einem der Ansprüche 1 bis 7 oder einer Vorrichtung nach einem der Ansprüche 8 bis 10 in einer Reflexionslichtschranke.

## Claims

1. Method for determining the light transit time along a measurement path arranged between a measuring apparatus and a reflecting object (3), wherein a light transmitter (1) contained in the measuring apparatus sends a modulated light signal s(t) along the measurement path, which is received by a light receiver (4) contained in the measuring apparatus, is converted into a received signal e(t) and is evaluated in the measuring apparatus, **characterised in that** the light signal s(t) to be transmitted is stored in the form of digital values in a transmitter memory (6, 19); **in that** the stored digital values are sequentially read out and supplied to a digital/analog converter (5) acted on by a clock signal and controlling the light transmitter (1); **in that** the received signal e(t) is supplied to an analog/digital converter (7) acted on by the identical clock signal; **in that** the values delivered by the analog/digital converter (7) are deposited in a receiver memory (8); **in that** a correlation function k(t) is formed between the signals s(t) and e(t) stored in the transmitter memory (6, 19) and in the receiver memory (8); and **in that** the maximum Kₘₐₓ = k(tₘₐₓ) of the correlation function k(t) is found, with tₘₐₓ corresponding to the transit time to be determined.

2. Method in accordance with claim 1, **characterised in that** rectangular pulse sequences each of predetermined time duration and greater bandwidth are used as the light signal s(t) to be transmitted, wherein Barker sequences, in particular of the length n = 13, are in particular used as the rectangular pulse sequences.

3. Method in accordance with any one of the preceding claims, **characterised in that** a transmission of a light signal is suppressed during the calculation of the light transit time from the signals s(t) and e(t) taking place in the measuring apparatus; and/or **in that** the signal s(t) and/or e(t) is converted prior to calculation of the correlation function k(t) into a bipolar signal around the value zero.

4. Method in accordance with any one of the preceding claims, **characterised in that** a polynomial p(t) is derived, the spacing of which from the correlation function k(t) in the region of Kₘₐₓ is a minimum, and whose maximum Pₘₐₓ = p(t_{max/pol}) is determined, with t_{max/pol} corresponding instead of tₘₐₓ to the transit time to be determined, wherein three or more values of k(t) are in particular used for the polynomial calculation; and/or **in that** the light signal to be transmitted by the light transmitter (1) is additionally transmitted via a reference path of known length or of negligibly small length, and the difference of the light transit times via the measurement and reference paths is taken into account for the calculation of the length of the measurement path.

5. Method in accordance with any one of the preceding claims, **characterised in that** the radiative power of the light transmitter (1) is regulated prior to transmitting a pulse sequence along the measurement path to a predetermined average value, in particular to half the maximum power of the light transmitter (1), wherein the regulating function is in particular set out of operation during the transmission of a pulse sequence along the measurement path, in particular through the switching over of the time constant of a corresponding regulating circuit.

6. Method in accordance with any one of the preceding claims, **characterised in that** for the light signal to be transmitted a signal is selected of a shape so that the correlation function k(t), which is derived, extends symmetrically to its maximum Kₘₐₓ, wherein in particular for a plausibility check straight lines are laid through the functional values k(tₘₐₓ-2) and k(tₘₐₓ-1) and also through the functional values k(tₘₐₓ+1) and k(tₘₐₓ+2) and a check is made whether the difference of their gradients lies within a predetermined tolerance range.

7. Method in accordance with any one of the preceding claims, **characterised in that** for a plausibility check the spacing, in particular the square of the spacing of the polynomial p(t) from the derived values of the correlation function k(t) in the region of the maximum Pₘₐₓ is determined and a check is made whether these values or the sum of these values lie within a preset tolerance range; and/or **in that** for a plausibility check a determination is made whether the maximum Kₘₐₓ of the correlation function k(t) lies above a predetermined threshold value.

8. Measurement apparatus for determining the light transit time along a measurement path comprising a light transmitter (1) for transmitting a modulated light signal s(t), a light receiver (4) for receiving the light signal reflected from an object (3) and an evaluation circuit for processing the received signal e(t) produced by the light receiver (4), **characterised by** a transmitter memory (6, 19) for storing the light signal s(t) to be transmitted in the form of digital values, by a digital/analog converter (5) acted on by the transmitter memory (6, 19) and controlling the light transmitter (1); by an analog/digital converter (7) acted on by the received signal e(t); by a receiver memory (8) for storing the values delivered by the analog/digital converter (7) and by a clock signal generator (9) which respectively acts on the digital/analog converter (5) and the analog/digital converter (7) with the identical clock signal, wherein the evaluation circuit is provided with means (10, 18) for the formation of a correlation function k(t) between the signals s(t) and e(t) stored in the transmitter memory (6, 19) and in the receiver memory (8), and for determining the maximum Kₘₐₓ = k(tₘₐₓ) of the correlation function k(t) representing the transit time tₘₐₓ to be determined.

9. Measurement apparatus in accordance with claim 8, **characterised by** a reference light receiver (14), which is arranged at the end of a reference path and can be coupled to the evaluation circuit, wherein in particular a change-over switch (26) is provided for selective coupling of the light receiver (4) and of the reference light receiver (14) to the evaluation circuit.

10. Measurement apparatus in accordance with any of claims 8 and 9, **characterised in that** the reference light receiver (14) is a component of a regulating circuit for regulating the current applied to the light transmitter (1), wherein in particular the regulating function of the regulating circuit can be switched on and switched off, preferably through a change of its time constant; and/or **in that** an additional photodiode is provided for determining the surface reflex of the optical system of the light transmitter in order to carry out a reference measurement.

11. Use of a method in accordance with any one of claims 1 to 7 or of an apparatus in accordance with any one of claims 8 to 10 in a reflection light barrier.

## Revendications

1. Procédé pour déterminer le temps de parcours de la lumière sur une distance. mesurée comprise entre un dispositif de mesure et un objet réfléchissant (3), dans lequel un émetteur de lumière (1) contenu dans le dispositif de mesure envoie un signal lumineux modulé s(t) sur la distance mesurée, lequel signal est reçu par un récepteur de lumière (4) contenu dans le dispositif de mesure, est transformé en un signal de réception e(t) et est évalué dans le dispositif de mesure,
**caractérisé en ce que** le signal lumineux s(t) à émettre est placé sous forme de valeurs numériques dans une mémoire d'émetteur (6, 19) ; **en ce que** les valeurs numériques mémorisées sont lues séquentiellement et fournies à un convertisseur numérique-analogique (5) qui est alimenté avec un signal d'horloge et qui commande l'émetteur de lumière (1) ; **en ce que** le signal de réception e(t) est fourni à un convertisseur analogique-numérique (7) alimenté avec le même signal d'horloge ; **en ce que** les valeurs délivrées par le convertisseur analogique-numérique (7) sont placées dans une mémoire de récepteur (8) ; **en ce qu'**une fonction de corrélation k(t) entre les signaux s(t) et e(t) mémorisés dans les mémoires d'émetteur (6, 19) et de récepteur (8) est formée ; **en ce que** le maximum Kₘₐₓ = k(tₘₐₓ) de la fonction de corrélation k(t) est calculé, tₘₐₓ correspondant au temps de parcours de la lumière à calculer.

2. Procédé selon la revendication 1,
**caractérisé en ce que** des suites d'impulsions rectangulaires, chacune d'une durée prédéterminée et de grande largeur de bande, sont utilisées en tant que signal lumineux s(t) à émettre, des suites de Barker notamment, d'une longueur n = 13 notamment, étant utilisées en tant que suites d'impulsions rectangulaires.

3. Procédé selon l'une quelconque des revendications précédentes,
**caractérisé en ce qu'**il n'y a pas d'émission de signal lumineux pendant le calcul, dans le dispositif de mesure, du temps de parcours de la lumière à partir des signaux s (t) et e (t), et/ou **en ce que** le signal s(t) et/ou e(t) est transformé, avant le calcul de la fonction de corrélation k(t), en un signal bipolaire autour de la valeur 0.

4. Procédé selon l'une quelconque des revendications précédentes,
**caractérisé en ce que** l'on calcule un polynôme p(t) dont l'écart par rapport à la fonction de corrélation k(t) est minimal à proximité de Kₘₐₓ et dont on détermine le maximum Pₘₐₓ = P(t_{max/pol}), t_{max/pol} correspondant, en lieu et place de tₘₐₓ, au temps de parcours de la lumière à calculer, trois ou plus de trois valeurs de k(t) étant utilisées pour le calcul de polynôme, notamment, et/ou
**caractérisé en ce que**, de plus, le signal lumineux à émettre est envoyé par l'émetteur de lumière (1) sur une distance de référence d'une longueur connue ou négligeable puis la différence entre les temps de parcours de la lumière sur la distance mesurée et sur la distance de référence est prise en compte pour le calcul de la longueur de la distance mesurée.

5. Procédé selon l'une quelconque des revendications précédentes,
**caractérisé en ce que**, préalablement à l'émission d'une suite d'impulsions sur la distance mesurée, la puissance radiative de l'émetteur de lumière (1) est réglée à une valeur moyenne prédéterminée, notamment à la moitié de la puissance maximale de l'émetteur de lumière (1), la fonction de réglage étant mise hors fonction pendant l'émission d'une suite d'impulsions sur la distance mesurée, notamment, en particulier par inversion de la constante de temps d'un circuit de réglage correspondant.

6. Procédé selon l'une quelconque des revendications précédentes,
**caractérisé en ce que**, pour le signal lumineux à émettre, un signal d'une forme telle que la fonction de corrélation calculée k(t) s'étende symétriquement par rapport à son maximum Kₘₐₓ est choisi, des lignes droites étant tirées passant par les valeurs de fonction k(tₘₐₓ - 2) et k(tₘₐₓ - 1) ainsi que par les valeurs de fonction k(tₘₐₓ + 1) et k(tₘₐₓ + 2) pour le contrôle de vraisemblance et vérification étant faite que la différence de leurs pentes se situe à l'intérieur d'une plage de tolérances prédéterminée.

7. Procédé selon l'une quelconque des revendications précédentes,
**caractérisé en ce que**, pour le contrôle de vraisemblance, on détermine l'écart, le carré de l'écart notamment, entre le polynôme p(t) et les valeurs calculées de la fonction de corrélation k(t) à proximité du maximum Pₘₐₓ et on vérifie si ces valeurs ou la somme de ces valeurs se situent à l'intérieur de la plage de tolérances définie à l'avance, et/ou **caractérisé en ce que**, pour le contrôle de vraisemblance, on détermine si le maximum Kₘₐₓ de la fonction de corrélation k(t) se situe au-dessus d'une valeur de seuil prédéterminée.

8. Dispositif de mesure pour déterminer le temps de parcours de la lumière sur une distance mesurée, à l'aide d'un émetteur de lumière (1) servant à émettre un signal lumineux modulé s(t), d'un récepteur de lumière (4) servant à recevoir le signal lumineux réfléchi par un objet (3), et d'un circuit d'évaluation servant à traiter le signal de réception e(t) produit par le récepteur de lumière (4),
**caractérisé par** une mémoire d'émetteur (6, 19) servant à mémoriser sous forme de valeurs numériques le signal lumineux s(t) à émettre ; un convertisseur numérique-analogique (5) alimenté par la mémoire d'émetteur (6, 19) et commandant l'émetteur de lumière (1) ; un convertisseur analogique-numérique (7) alimenté avec le signal de réception e(t) ; une mémoire de récepteur (8) servant à mémoriser les valeurs délivrées par le convertisseur analogique-numérique (7) ; et un générateur de signaux d'horloge (9) alimentant le convertisseur numérique-analogique (5) et le convertisseur analogique-numérique (7) avec, à chaque fois, le même signal d'horloge ; le circuit d'évaluation étant pourvu de moyens (10, 18) destinés à former une fonction de corrélation k(t) entre les signaux s(t) et e(t) mémorisés dans les mémoires d'émetteur (6, 19) et de récepteur (8) et destinés à déterminer le maximum Kₘₐₓ = k(tₘₐₓ) de la fonction de corrélation k(t) représentant le temps de parcours tₘₐₓ à déterminer.

9. Dispositif de mesure selon la revendication 8,
**caractérisé par** un récepteur de lumière de référence (14) qui est disposé à l'extrémité d'une distance de référence et qui peut être couplé au circuit d'évaluation, un inverseur (26) qui sert à coupler, au choix, le récepteur de lumière (4) et le récepteur de lumière de référence (14) au circuit d'évaluation étant prévu notamment.

10. Dispositif de mesure selon l'une quelconque des revendications 8 et 9,
**caractérisé en ce que** le récepteur de lumière de référence (14) est un composant d'un circuit de réglage servant à régler le courant fourni à l'émetteur de lumière (1) où, notamment, la fonction de réglage du circuit de réglage peut être connectée où déconnectée, de préférence par une modification de la constante de temps- dudit circuit, et/ou **caractérisé en ce que**, pour effectuer un mesurage de référence, il est prévu une photodiode supplémentaire servant à détecter le reflet superficiel de l'optique de l'émetteur de lumière.

11. Utilisation d'un procédé selon l'une quelconque des revendications 1 à 7 ou d'un dispositif selon l'une quelconque des revendications 8 à 10 dans un barrage photoélectrique de réflexion.
